# EUROPEAN PATENT APPLICATION

(11) **EP 2 713 578 A2**
(43) Date of publication of application: **02.04.2014**
(21) Application number: 13182279.3
(22) Date of filing: 29.08.2013
(51) Int. Cl.: H04L 29/06

(54) **Clone defence system and method for secure mobile payment**

(30) Priority: 26.09.2012 US 201261705644 P; 10.05.2013 US 201313891207
(71) Applicant: MPayMe Ltd., Wan Chai, Hong Kong (CN)
(72) Inventor: Gadotti, Alessandro, Wan Chai (CN)
(74) Representative: Modiano, Micaela Nadia

(57) **Abstract**

A clone attack on the security of the mobile payment system occurs when a transaction is conducted from more than one mobile communication device for a user account, or when the data communication within the transaction is transmitted from more than one mobile communication device or from a mobile communication device other than the mobile communication device that was registered initially. The presently claimed clone defense method and system employ a first counter in each data communication message, a second counter at the sending end, and a third counter at the receiving end. By incrementing the counters when sending and receiving the data communication messages and matching the counters at the receiving end, cone attacks can be detected.

## Description

### Claim for Domestic Priority:

This application claims priority under 35 U.S.C. § 119 to the U.S. Provisional Utility Patent Application No. 61/705,644, filed September 26, 2012, and the disclosure of which is incorporated herein by reference in its entirety.

### Cross-Reference to Related Application:

This application is a continuation-in-part of U.S. Patent Application Serial No. 13/602,197 filed September 2, 2012, the disclosure of which is incorporated herein by reference in its entirety.

### Field of the Invention:

The present invention relates generally to methods of management and execution of electronic bill payments, electronic purchase payments, fund transfers, and other value exchanges. More specifically, the present invention relates to methods of management and execution of financial transactions using mobile communication devices. Still more specifically, the present invention relates to online security for conducting financial transactions using mobile communication devices.

### Background:

Modern day commerce involves conducting financial transactions through many different channels using a variety of instruments. Payment transfer of physical currency is the most common means when the transacting parties are located away from any banking facility. Other payment methods and systems have appeared over the years. Credit cards, debit cards, Internet online payment services such as PayPal^{™}, and near field communication (NFC) enabled stored value holder devices and systems, such as the Octopus Card widely used in Hong Kong, China, are some of the more prevalent examples. However, none of the existing payment methods and systems has achieved the same level of ubiquity and ease of use as cash. Each of these payment methods and systems requires its own dedicated infrastructure and/or is limited to a few channels. For instance, credit card payments require the merchants or the payees to be equipped with card readers and fixed communication networks connecting the readers to the clearance centers.

Another shortcoming of existing payment methods and systems is that person-to-person transactions are either unfeasible or highly inconvenient. Take credits cards, debit cards, and other stored value cards for instance. Although it is possible to mass-produce personal card readers with the current technology, the need for dedicated infrastructures, which are yet to be built out on a scale beyond the city metropolitan level, is an impediment to their general availability and adoption.

Still one obstacle preventing the wide usages and general adoption of these mobile payment methods and systems is the concern for security around the electronic financial transactions conducted over mobile network infrastructures. One particular type of attack on the security of mobile payment systems is the attempt to gain access to the systems by imitating or duplicating the identity of an authorized user, a machine signature of a registered device, or a legitimate data communication message or transaction. Other than deliberate security attacks, an authorized user could inadvertently misuse a non-registered or unauthorized device in conducting payment transactions. In these situations, the user, device, data communication message or transaction is said to be "cloned." Existing methods and systems for securing electronic financial transactions conducted over mobile network infrastructures require expensive implementation, active end users' involvement, or both.

### Summary:

It is an objective of the present invention to provide a method and system for securing electronic financial transactions conducted over mobile network infrastructures that can be used in conjunction with the mobile payment method and system disclosed in the U.S. Patent Application No. 13/602,197. The presently claimed invention can also be adapted to be used in other mobile payment method and systems.

It is a further objective of the present invention to provide such method and system for detecting and preventing the unauthorized duplications of the identity of, data communication messages sent to and received from, and/or transactions initiated from a mobile communication device registered and authorized to participate in a secured mobile payment network. Such detection and prevention of unauthorized duplications is called clone defense.

In accordance with the preferred embodiment of the present invention, a clone defense method and system are adapted to provide one of one or more security layers employed in the mobile payment method and system disclosed in the U.S. Patent Application No. 13/602,197.

In accordance with various embodiments of the mobile payment system disclosed in the U.S. Patent Application No. 13/602,197, the claimed invention comprises a central processing server accessible through a first communication network, such as the Internet; a plurality of users including individual users and business users; and mobile communication devices and client computing devices that can access the central processing server through the first communication network. The authenticity of the financial transactions conducted between the users in this mobile payment system relies primarily on the system restriction that only one mobile communication device is associated ("paired") with the user account of one user at any time.

A clone attack on the security of the mobile payment system occurs when a transaction is conducted from more than one mobile communication device for a user account, or when the data communication within the transaction is transmitted from more than one mobile communication device or from a mobile communication device other than the mobile communication device that was registered initially. The presently claimed clone defense method and system can detect such clone attacks; terminate the transaction in question; and disassociate ("unpair") the mobile communication device that is paired with the user account involved.

In accordance to one embodiment of the presently claimed clone defense method and system, each data communication message exchanged between a mobile communication device and the central processing server comprises a first counter value. In the central processing server, a second counter value is maintained for each user account. The mobile communication device that is paired with the user account also maintains a third counter value. When a data communication message is sent from the paired mobile communication device to the central processing server, the first counter value [message CD Counter] within the data communication message is set to the third counter value [device CD Counter] maintained within the paired mobile communication device. When the data communication message is received, the second counter value maintained by the central processing server for the user account is used to compare with the first counter value in the data communication message. When the central processing server receives the data communication, it retrieves the first counter value in the data message and compares it with the second counter value. A clone attack is detected if the difference of value between the two counter values is higher than a predetermined tolerance threshold value. After this check is completed, the central processing server increments the second counter by one and sends an acknowledgment message to the paired mobile communication device instructing it to increment the third counter by one. When the mobile communication device sends another data message, the above steps are repeated. Upon the detection of a clone attack, the central processing server discards the transaction that has been carried out in association with the data messages. The central processing server then sends a message to the paired mobile communication device instructing it to reset its configuration to default and also resets the information of the user account as such that the paired mobile communication device is unpaired.

In accordance to one embodiment of the presently claimed clone defense method and system, fault tolerance functionality is also provided by incorporating a retry flag, which is one or more control data bits, in the data message exchanged between the central processing server and the mobile communication devices. Additional logic in the counter value check process in the central processing server and the mobile communication devices are used to handle the scenario in which a data message is re-sent one or more times due to transmission loss or error.

### Brief Description of the Drawings:

Embodiments of the invention are described in more detail hereinafter with reference to the drawings, in which:

FIG. **1** shows a diagram illustrating the logical composition of a data message being exchanged in a mobile payment system employing the clone defense system in accordance to one embodiment of the present invention; and

FIG. **2** shows a diagram illustrating three possible clone detection scenario in the clone defense system in accordance to one embodiment of the presently clainled invention.

### Detailed Description:

In the following description, methods and systems for providing detection and prevention mechanism against clone attacks on mobile payment systems and the likes are set forth as preferred examples. It will be apparent to those skilled in the art that modifications, including additions and/or substitutions may be made without departing from the scope and spirit of the invention. Specific details may be omitted so as not to obscure the invention; however, the disclosure is written to enable one skilled in the art to practice the teachings herein without undue experimentation.

In accordance with the preferred embodiment of the presently claimed invention, a clone defense method and system are adapted to provide one of one or more security layers employed in the mobile payment method and system disclosed in the U.S. Patent Application No. 13/602,197. The presently claimed invention can also be adapted to provide the clone defense function in other data communication methods and systems.

In accordance with various embodiments of the mobile payment system disclosed in the U.S. Patent Application No. 13/602,197, the claimed invention comprises a central processing server accessible through a first communication network, such as the Internet; a plurality of users including individual users and business users; and mobile communication devices and client computing devices that can access the central processing server through the first communication network. The authenticity of the financial transactions conducted between the users in this mobile payment system relies primarily on the system restriction that only one mobile communication device is associated ("paired") with the user account of one user at any time.

A clone attack on the security of the mobile payment system occurs when a transaction is conducted from other than the mobile communication device that was initially paired and used.. The presently claimed clone defense method and system can detect such clone security attacks; reset the mobile communication device configuration and terminate the transaction in question; and disassociate ("unpair") the mobile communication device that is paired with the user account involved,

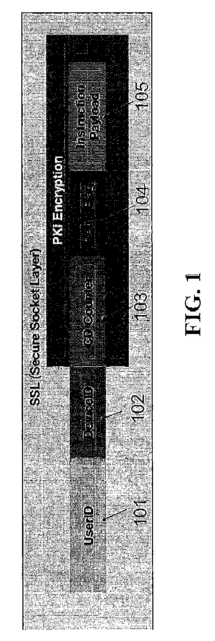

Referring to FIG. **1**. In accordance to one embodiment of the presently claimed clone defense method and system, each data communication message exchanged between a mobile communication device and the central processing server comprises a user ID **101,** a device ID **102,** a message Clone Defense Counter (CD Counter) **103,** a retry flag **104,** and an instruction payload **105.** Under a session-less and stateless transmission protocol, such as that used in an exemplary embodiment in accordance to the invention claimed in the U.S. Patent Application Serial No. 13/602,197, each data communication message is independent and does not require prior transmission hand-shaking or authorization. In accordance to one embodiment, the portion of the data communication message comprising the message Clone Defense Counter (CD Counter) **103,** the retry flag **104,** and the instruction payload **105** is PKI encrypted using, for example, AES. The PKI encrypted portion of the data communication message and the rest of the data communication message are transmitted over Secure Socket Layer (SSL).

In accordance to one embodiment of the presently claimed clone defense method and system, the Message CD Counter in each data communication message exchanged between a mobile communication device and the central processing server is a first integer counter value. In the central processing server, a second integer counter value (User Account CD Counter) is also maintained for each user account. The mobile communication device that is paired with the user account also maintains a third integer counter value (Device CD Counter).

In accordance to one embodiment, both the User Account CD Counter of a user account and the Device CD Counter will be set to the same randomly generated value when the mobile communication device is paired with the user account.

When a data communication message is sent from the paired mobile communication device to the central processing server, the Message CD Counter value is set to the Device CD Counter value.. When the central processing server receives the data communication, it retrieves the Message CD Counter in the data message and compares it against the User Account CD Counter associated with the paired mobile communication device to determine if the difference of value between the two counter values is within a predetermined tolerance threshold value.

Still referring to FIG. **1****.** In accordance to one embodiment of the presently claimed clone defense method and system, an additional fault tolerance functionality is also provided by incorporating a retry flag **104,** which is one or more control bits, in the data message exchanged between the central processing server and the mobile communication devices. Additional logic in the counter value check and clone detection processes in the central processing server and the mobile communication devices are used to handle the scenario in which a data message is re-sent due to transmission loss or error, or when the corresponding reply data message is not received within a wait time period.

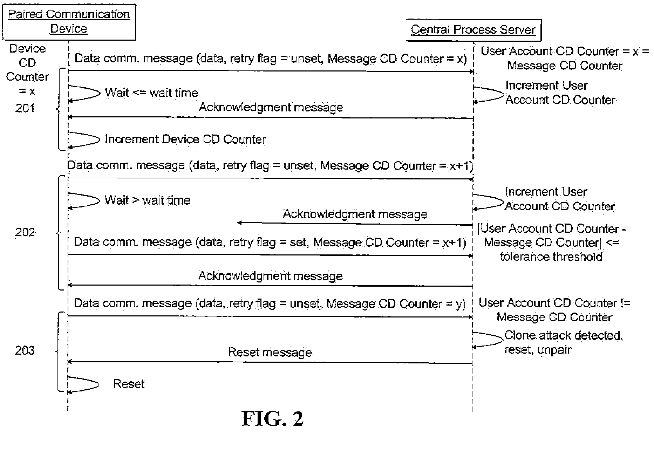

Referring to FIG. **2****.** In accordance to one embodiment of the presently claimed clone defense method and system with the additional fault tolerance functionality, the clone detection process includes the following primary scenarios and process steps:

**201:** When both the Message CD Counter and the User Account CD Counter in the central processing server are having the same value x, regardless of the value the retry flag, the data communication message is regarded as authentic and accepted.

When a data communication message having a Message CD Counter value = *x* is sent by the mobile computing device, under normal operation, at the message-receiving central processing server, the User Account CD Counter should also have a value = x at the time of receiving the data communication message.

**202:** On the other hand, if the data communication message is lost, or if the acknowledgment message from the central processing server does not reach the mobile computing device within a predetermined wait time period, then the mobile computing device will proceed to resend the data communication message as are-sent data communication message upon the expiration of the wait time period, wherein the re-sent data communication message will have a Message CD Counter value = *x* and a retry flag being set. The User Account CD Counter at the message-receiving central processing server, on the other hand, might have a value = *x* + *i*, *i* = 1, 2, 3, ..., n, depending on the number times the re-sent data communication message is received and the acknowledgment message is sent since the central processing server increments the User Account CD Counter by one before sending the acknowledgment message.

However, because the retry flag is set, if the difference of value between the two counter values (|Message CD Counter value - User Account CD Counter value|) is not higher than a predetermined tolerance threshold value, the re-sent data communication message is still regarded as authentic and accepted. In this case, the User Account CD Counter value will be set to the Message CD Counter value before it is to be incremented and the acknowledgment message to be sent.

**203:** When the values of the Message CD Counter and the User Account CD Counter are unmatched and that the retry flag in the data communication message is unset, a clone attack is detected. Upon the detection of a clone attack, the central processing server discards the transaction that has been carried out in association with the data communication messages. The central processing server then sends a message to the paired mobile communication device instructing it to reset its configuration to default and also resets the information of the user account as such that the paired mobile communication device is unpaired.

Due to the varying degrees of severity of the adverse effects existing in different geographic regions or mobile communication infrastructures and in turn the varying probabilities of occurrences of failed and incomplete transactions, it is desirable that the reliability factors of the fault tolerance functionality are adjustable. As such, the present invention allows a configurable number of resend of a data communication message. Under this alternative embodiment, the process step **202** further comprises: If the data communication message is lost, or if the acknowledgment message (corresponding to the data communication message) sent from the central processing server does not reach the mobile computing device within a wait time period, then the data communication message is to be re-sent until a subsequent data communication message and acknowledgment message are successfully exchanged; or a configurable upper limit of number of data communication message resenting is reached. This configurable upper limit of number of data communication message resending is same or lower than the aforementioned predetermined tolerance threshold value.

The following table summarizes the scenarios of the clone detection process with the additional fault tolerance functionality:

| **Message and User Account CD Counter values** | **Retry Flag state** | **Clone Detection** | **Scenario** |
|---|---|---|---|
| Match | Unset | False | Norman operation |
| Unmatched by ≤ *tolerance threshold* | Unset | True | Clone attack |
| Unmatched by ≤ *tolerance threshold* | Set | False | Data communication message re-sent |
| Unmatched by > *tolerance threshold* | Unset | True | Clone attack or tampering |
| Unmatched by > *tolerance threshold* | Set | True | Clone attack or tampering |

Based on observations and results from trial runs of the secure mobile payment system in accordance to the present invention implemented on typical mobile network infrastructures and geographic regions, the optimal *tolerance threshold* value is 3.

The embodiments disclosed herein may be implemented using general purpose or specialized computing devices, computer processors, or electronic circuitries including but not limited to digital signal processors (DSP), application specific integrated circuits (ASIC), field programmable gate arrays (FPGA), and other programmable logic devices configured or programmed according to the teachings of the present disclosure. Computer instructions or software codes running in the general purpose or specialized computing devices, computer processors, or programmable logic devices can readily be prepared by practitioners skilled in the software or electronic art based on the teachings of the present disclosure.

In some embodiments, the present invention includes computer storage media having computer instructions or software codes stored therein which can be used to program computers or microprocessors to perform any of the processes of the present invention. The storage media can include, but are not limited to, floppy disks, optical discs, Blu-ray Disc, DVD, CD-ROMs, and magneto-optical disks, ROMs, RAMs, flash memory devices, or any type of media or devices suitable for storing instructions, codes, and/or data.

The foregoing description of the present invention has been provided for the purposes of illustration and description. It is not intended to be exhaustive or to limit the invention to the precise forms disclosed. Many modifications and variations will be apparent to the practitioner skilled in the art.

The embodiments were chosen and described in order to best explain the principles of the invention and its practical application, thereby enabling others skilled in the art to understand the invention for various embodiments and with various modifications that are suited to the particular use contemplated. It is intended that the scope of the invention be defined by the following claims and their equivalence.

## Claims

1. A computer implemented method for detecting clone attack in data communication, comprising:
maintaining, by a central processing server, a second counter for each user account of one or more user accounts;
maintaining, by a communication device, a third counter;
setting both the second counter and the third counter to an initial value when the communication device is paired with a user account corresponding to the second counter;
setting, by the communication device, a first counter value to the third counter value;
generating, by the communication device, a data communication message, wherein the data communication message comprising the first counter;
sending, by the communication device, the data communication message to the central processing server;
receiving, by the central processing server, the data communication message;
comparing, by the central processing server, the first counter value against the second counter value for the user account associated with the communication device;
determining, by the central processing server, whether a clone attack is occurring;
if no clone attack is detected, incrementing, by the central processing server, the second counter value by one value unit; and
if no clone attack is detected, incrementing, by the communication device, the third counter value by one value unit.

2. The method of claim 1, wherein the step of determining whether a clone attack is occurring further comprises:
a clone attack is detected if the first counter value does not match the second counter value.

3. The method of claim 1, further comprising:
if no clone attack is detected, before the step of incrementing the third counter value, sending, by the central processing server, an acknowledgment message to the communication device.

4. The method of claim 1, further comprising:
after the step of sending, by the communication device, the data communication message to the central processing server:
waiting, by the communication device, for an acknowledgment message from the central processing server, for a waiting time period;
if the acknowledgment message is not received within the waiting time period:
resending, by the communication device, the data communication message to the central processing server, wherein the data communication message further comprises a retry flag, and wherein the retry flag is set to a value representing a retry status; and
repeating the steps from waiting for an acknowledgment message from the central processing server for a waiting period to resending the data communication message until the acknowledgment message is received the waiting time period or upper limit of number of data communication message resending is reached.

5. The method of claim 1, wherein the step of determining whether a clone attack is occurring further comprises:
a clone attack is not detected if the retry flag is set to a value representing a retry status and difference of value between the first counter value and the second counter value is not higher than a tolerance threshold value;
a clone attack is detected if difference of value between the first counter value and the second counter value is higher than a tolerance threshold value; and
a clone attack is detected if a retry flag in the data communication message is unset and the first counter value does not match the second counter value.

6. The method of claim 5, wherein the tolerance threshold value is one.

7. The method of claim 5, wherein the tolerance threshold value is three.

8. The method of claim 1, wherein the initial value being a randomly generated number.

9. A system for detecting clone attack in data communication, comprising:
a central processing server configured to:
maintain a second counter for each user account of one or more user accounts;
set both the second counter and a third counter to an initial value when a communication device is paired with a user account corresponding to the second counter;
receive a data communication message from the communication device;
compare a first counter value contained within the data communication message against the second counter value for the user account associated with the communication device;
determine whether a clone attack is occurring; and
if no clone attack is detected, increment the second counter value by one value unit; and
the communication device configured to:
maintain the third counter;
set the first counter value to the third counter value;
generate a data communication message, wherein the data communication message comprising the first counter;
send the data communication message to the central processing server; and
if no clone attack is detected, increment the third counter value by one value unit.

10. The system of claim 9, wherein the central processing server is further configured to determine that a clone attack is detected if the first counter value does not match the second counter value.

11. The system of claim 9, wherein the central processing server is further configured to send an acknowledgment message to the communication device if no clone attack is detected.

12. The system of claim 9, wherein the communication device is further configured to:
wait for an acknowledgment message from the central processing server, for a waiting time period after the step of sending the data communication message to the central processing server;
if the acknowledgment message is not received within the waiting time period:
resend the data communication message to the central processing server, wherein the data communication message further comprises a retry flag, and wherein the retry flag is set to a value representing a retry status; and
repeat the steps from waiting for an acknowledgment message from the central processing server for a waiting period to resending the data communication message until the acknowledgment message is received the waiting time period or upper limit of number of data communication message resending is reached.

13. The system of claim 9, wherein the step of determining whether a clone attack is occurring further comprises:
a clone attack is not detected if the retry flag is set to a value representing a retry status and difference of value between the first counter value and the second counter value is not higher than a tolerance threshold value;
a clone attack is detected if difference of value between the first counter value and the second counter value is higher than a tolerance threshold value; and
a clone attack is detected if a retry flag in the data communication message is unset and the first counter value does not match the second counter value.

14. The system of claim 13, wherein the tolerance threshold value is one.

15. The system of claim 13, wherein the tolerance threshold value is three.
